# FASCICULE DE BREVET EUROPEEN

(11) **EP 1 520 158 B1**
(45) Date de publication et mention de la délivrance du brevet: **26.11.2008**
(21) Numéro de dépôt: 03761649.7
(22) Date de dépôt: 26.06.2003
(51) Int. Cl.: G01J 3/44

(54) **APPAREIL DE SPECTROMETRIE RAMAN**
RAMAN-SPEKTROMETRIEVORRICHTUNG
RAMAN SPECTROMETRY APPARATUS

(30) Priorité: 28.06.2002 FR 0208156
(43) Date de publication de la demande: 06.04.2005
(73) Titulaire: Horiba Jobin Yvon S.A.S., 91160 Longjumeau (FR)
(72) Inventeur: NGUYEN, Quy, Dao, F-91190 Gif-sur-Yvette (FR); DA SILVA, Edouard, F-59800 Lille (FR)
(74) Mandataire: Catherine, Alain
(86) Numéro de dépôt international: PCT/FR2003/001982
(87) Numéro de publication internationale: WO 2004/003496

(56) Documents cités:
- US-A- 5 424 825
- US-A- 6 128 078
- CARRABBA M M: "THE UTILIZATION OF A HOLOGRAPHIC BRAGG DIFFRACTION FILTER FOR RAYLEIGH LINE REJECTION IN RAMAN SPECTROSCOPY" APPLIED SPECTROSCOPY, THE SOCIETY FOR APPLIED SPECTROSCOPY. BALTIMORE, US, vol. 44, no. 9, 1990, pages 1558-1561, XP000579916 ISSN: 0003-7028

## Description

La présente invention concerne un appareil de spectrométrie Raman.

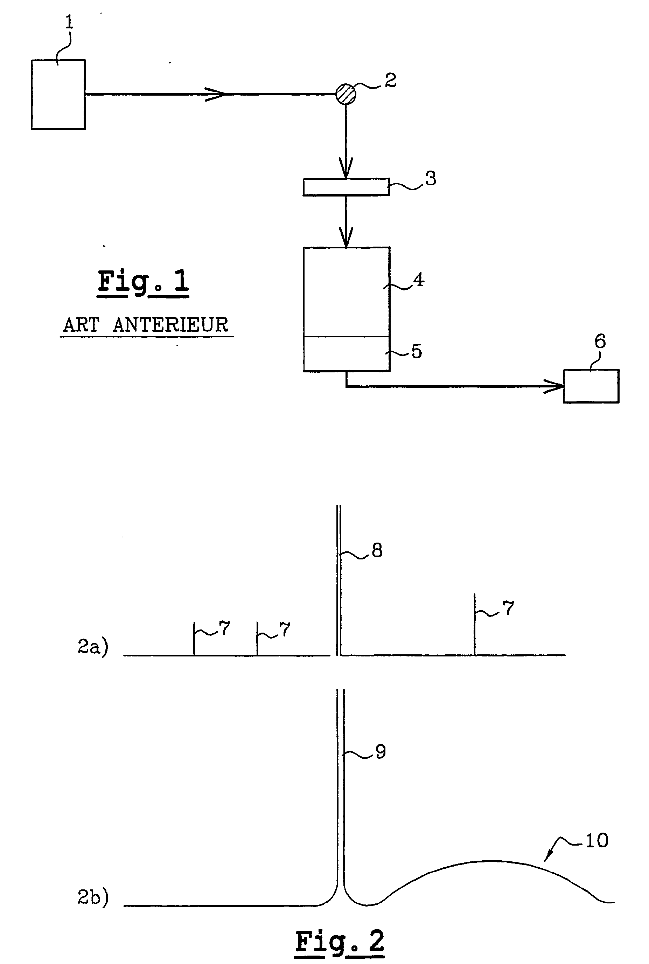

On connaît de nombreux montages de spectrométrie Raman laser. Ces montages comprennent, en général, un laser 1 venant éclairer un échantillon 2 macrométrique ou micrométrique sous microscope (Figure 1). La lumière Raman diffusée est alors filtrée par un filtre holographique 3, dispersée par un spectromètre 4 et analysée par un détecteur multicanal 5. Les signaux issus du détecteur multicanal sont stockés et traités par une unité de traitement 6, par exemple, un ordinateur.

Le document US-A-5 424 825 divulgue un dispositif spectrométrique du type pré-monochromateur permettant de filtrer des bandes spectrales.

Le document CARRABBA M M: "THE UTILIZATION OF A HOLOGRAPHIC BRAGG DIFFRACTION FILTER FOR RAYLEIGH LINE REJECTION IN RAMAN SPECTROSCOPY" APPLIED SPECTROSCOPY, THE SOCIETY FOR APPLIED SPECTROSCOPY. BALTIMORE, US, vol. 44, no. 9, 1990, pages 1558-1561; ISSN: 0003-7028 divulgue l'utilisation d'un filtre holographique permettant de rejeter le rayonnement Rayleigh en spectrométrie Raman.

Le document US-A-6 128 078 divulgue un spectromètre comprenant un réseau bidimensionnel de micromiroirs modulables permettant de refléter, vers un détecteur, des composantes spectrales individuelles.

L'objet du brevet est d'adapter à la spectrométrie Raman de nouveaux dispositifs optoélectroniques disponibles sur le marché pour réaliser un appareil automatisé.

En particulier de nouveaux lasers "solides" sont disponibles procurant des puissances lumineuses suffisantes à des prix très compétitifs. Cependant, alors que pour des lasers à gaz, les raies parasites 7 émises en plus de la raie laser utile 8 sont facilement filtrables avec, par exemple, un filtre interférentiel, les lasers "solides" ont l'inconvénient d'émettre, en plus de la raie centrale 9, un fond continu 10 ou d'avoir une trop grande largeur spectrale (Figure 2). Ces lasers peuvent, d'autre part, changer de mode ou en fonction de la température, changer très légèrement de fréquence d'émission.

Il est donc indispensable dans un appareil simplifié de contrôler cette fréquence avec précision.

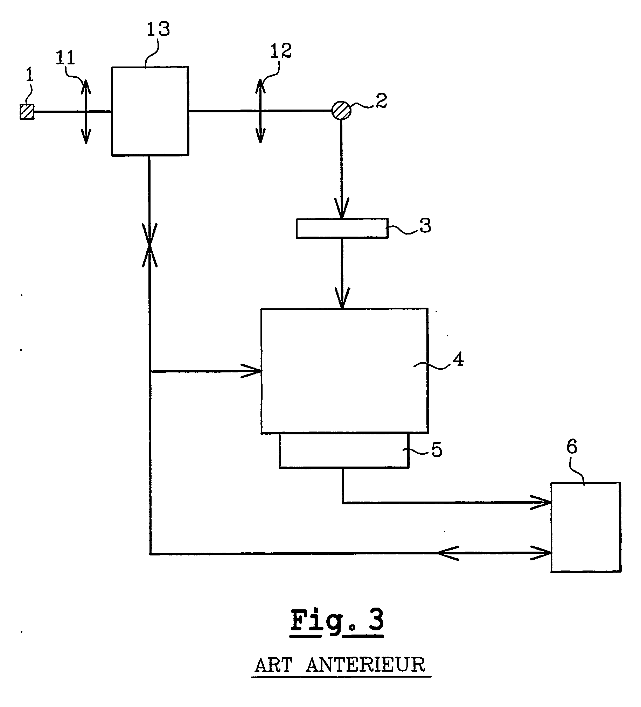

On peut bien sûr associer un spectromètre au laser pour contrôler la largeur de raie, le fond et la fréquence d'émission. Mais cette opération (Figure 3) demande des optiques additionnelles 11, 12 ainsi qu'un dispositif de correction indépendant 13 qui doit aussi corriger le spectromètre Raman. Il en résulte une complication accrue de l'installation.

L'objectif de la présente invention est de proposer un appareil de spectrométrie Raman, simple dans sa conception et dans son mode opératoire, très rapide et économique permettant d'utiliser le même système de dispersion pour le filtrage et la détection et permettant ainsi, avantageusement, lors de la correction de la longueur d'onde d'excitation laser de corriger automatiquement le déplacement du spectre Raman.

A cet effet, l'invention concerne un appareil de spectrométrie Raman comportant :
- une source d'excitation,
- des moyens optiques d'excitation dirigeant un faisceau d'excitation issu de cette source sur l'échantillon,
- des moyens de collecte de l'énergie diffusée par l'échantillon comportant une fente d'entrée de diffusion,
- un système de dispersion spectrale, des moyens de sélection de l'énergie Raman,
- un détecteur,
- des moyens optiques de détection dirigeant l'énergie Raman collectée et sélectionnée vers le détecteur.

Selon l'invention,
- les moyens optiques d'excitation font disperser le faisceau d'excitation par le système de dispersion, et
- lesdits moyens optiques d'excitation comportant une fente d'entrée et une fente de sortie d'excitation constituée par la fente d'entrée de diffusion et sélectionnant la longueur d'onde d'excitation,
- des moyens de prélèvement d'une partie du faisceau d'excitation, lesdits moyens de prélèvement étant placés entre la fente de sortie d'excitation et l'échantillon et permettant de contrôler la longueur d'onde d'excitation à son maximum d'énergie par la microrotation du système de dispersion.

Dans différents modes de réalisation, la présente invention concerne également les caractéristiques suivantes qui devront être considérées isolément ou selon toutes leurs combinaisons techniquement possibles :
- la fente d'entrée d'excitation est dans le plan focal du système de dispersion,
- les moyens de sélection de l'énergie Raman comportent un filtre holographique qui arrête la longueur d'onde d'excitation,
- les moyens de sélection de l'énergie Raman comportent un système réflecteur à micromiroirs commandables.

Dans différents modes de réalisation possibles, l'invention sera décrite plus en détail en référence aux dessins annexés dans lesquels :
- la figure 1 est une représentation schématique d'un appareil de spectrométrie Raman de l'art antérieur;
- la figure 2 est un exemple de spectre d'émission d'un laser à gaz (Fig. 2a) et de spectre d'émission d'un laser solide (Fig. 2b);
- la figure 3 est une représentation schématique d'un appareil de spectrométrie Raman comportant un spectromètre, selon l'art antérieur;
- la figure 4 est une représentation schématique d'un appareil de spectrométrie Raman, selon la présente invention ;
- la figure 5 représente schématiquement un mode de réalisation de la fente d'entrée d'excitation (Fig. 5a) ainsi que son positionnement dans l'appareil de spectrométrie Raman (Fig. 5b) selon l'invention.

L'appareil de spectrométrie Raman, selon l'invention, comporte une source d'excitation 14, par exemple, un laser solide émettant un faisceau d'excitation 15. Des moyens optiques 16 d'excitation dirigent ledit faisceau d'excitation 15 sur un échantillon 17 à analyser en passant par le disperseur 20. L'énergie diffusée par l'échantillon 17, résultant de l'interaction de celui-ci avec le faisceau d'excitation 15, est collectée par des moyens de collecte 18 comportant une fente 19 d'entrée de diffusion. Après passage par ladite fente 19 l'énergie collectée est envoyée sur un système de dispersion spectrale 20 généralement un réseau. Des moyens optiques de détection dirigent alors l'énergie Raman collectée et sélectionnée vers un détecteur 22. L'appareil comporte également des moyens de sélection 23 de l'énergie Raman qui sont placés préférentiellement devant ledit détecteur 22.

Selon l'invention, les moyens optiques d'excitation font disperser le faisceau d'excitation 15 par le système de dispersion 20, lesdits moyens optiques d'excitation comportant un réflecteur 16, une fente d'entrée 24 et une fente de sortie d'excitation constituée par la fente d'entrée 19 de diffusion et sélectionnant la longueur d'onde d'excitation.

Dans un mode de réalisation préféré, la fente d'entrée 24 d'excitation est dans le plan focal du système de dispersion 20.

L'invention est illustrée par le mode de réalisation décrit ci-dessous.

L'énergie Raman diffusée par l'échantillon 17 est collectée par des moyens de collecte 18 comprenant un objectif à grande ouverture pour les macroéchantillons ou par un objectif de microscope pour les microéchantillons. Cette énergie est focalisée sur la fente d'entrée 19 de diffusion et dispersée par un système de dispersion 20, par exemple un réseau holographique. Le spectre vient se former sur des moyens optiques de détection comprenant un miroir plan 25, il est repris par un miroir sphérique 26 et reformé sur des moyens de sélection de l'énergie Raman comprenant, par exemple, un dispositif optoélectronique à micromiroirs 27 commandés par un calculateur.

Ces micromiroirs 27 permettent d'envoyer une énergie spectrale sélectionnée vers un détecteur 22 qui est généralement un photomultiplicateur ou une diode à avalanche.

Les moyens de sélection de l'énergie Raman comprennent également un filtre holographique 28 arrêtant la raie laser. Ledit filtre est placé entre le détecteur 22 et le plan focal, préférentiellement devant le détecteur 22, il permet d'arrêter la raie laser diffusée par l'échantillon 17 ainsi que l'énergie laser diffusée par le laser 14 à l'intérieur du spectromètre.

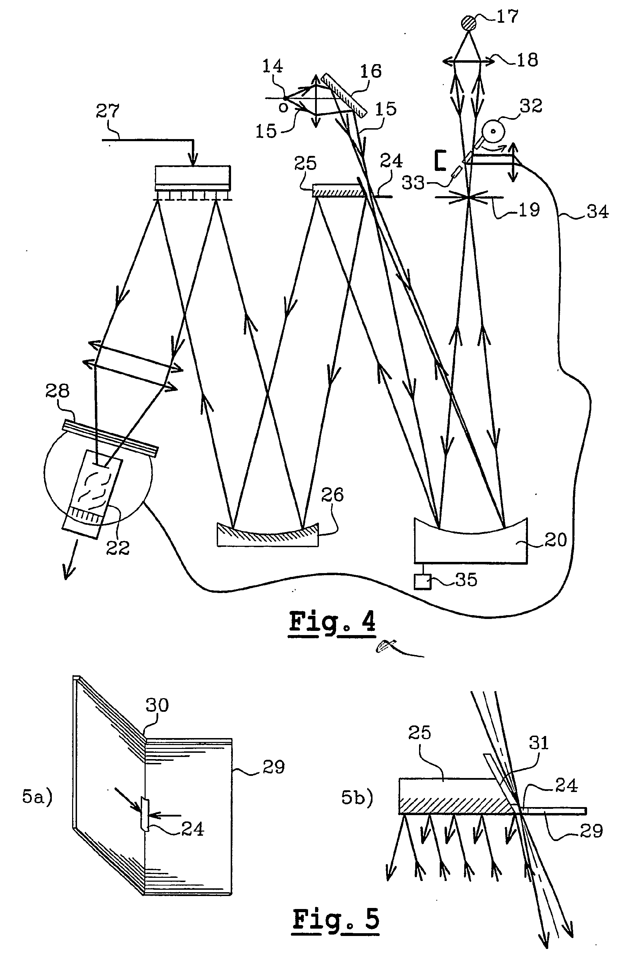

Le laser 14 émet un faisceau 15 qui est envoyé dans le spectromètre par une fente 24 placée tout près du miroir plan 25 de renvoi du spectre (Figure 5 a) et découpée dans une lame métallique 29 très fine (quelques dizaines de micromètres) noircie à l'intérieur et sur l'arête 30 de laquelle est découpée une fente de quelques centièmes de mm de largeur et de quelques mm de hauteur (Figure 5 b). Cette partie métallique dans laquelle est découpée la fente peut être collée sur le biseau 31 du miroir plan 25, de manière que la fente 24 soit rigoureusement dans le plan focal du spectre Raman.

Le faisceau 15 pénètre dans le spectromètre et sort par la fente d'entrée 19 de diffusion avec la même résolution spectrale que le spectre Raman qu'il va générer. Le fond parasite éventuellement présent du laser est soustrait ainsi que la largeur spectrale est réduite à la résolution de la fente.

En raison du trajet inverse de la lumière, le faisceau 15 touche l'échantillon 17 en un point qui émettra la lumière Raman analysée.

L'appareil comprend de plus des moyens de prélèvement d'une partie du faisceau d'excitation. Ces moyens sont placés entre la fente d'entrée 19 de diffusion et l'échantillon 17. Ils permettent de contrôler la longueur d'onde d'excitation de sorte qu'elle soit à son maximum d'énergie. Ce contrôle de la longueur d'onde d'excitation est opéré par la microrotation du système de dispersion 20. Dans un mode de réalisation, ces moyens de prélèvement comprennent un moteur 32 agissant sur une lame 33 pour renvoyer une fraction de la lumière laser vers une fibre optique 34. Cette fibre optique 34 transporte l'énergie prélevée vers le détecteur 22 qui effectue la mesure.

Pour rechercher le centre de la raie laser, un piézoélectrique 35 placé derrière le système de dispersion, permet des déplacements d'une fraction de degré. Ce piézoélectrique sert à placer le système de dispersion 20 de sorte que le laser 14 soit au maximum de son intensité. Ce système permet avantageusement par l'utilisation d'un même système de dispersion pour corriger la longueur d'onde d'excitation et pour disperser l'énergie Raman, de corriger automatiquement le déplacement du spectre Raman sans réglage supplémentaire de l'appareil.

On peut analyser le spectre point par point en envoyant l'énergie de chaque miroir composant le dispositif optoélectronique à micromiroirs 27 durant un même temps sur le détecteur 22, on obtiendra un spectre monocanal.

Mais on peut aussi grâce à des tables préétablies et disponibles rechercher les fréquences caractéristiques d'un corps. A titre d'exemple si on recherche la présence d'un alcool en sélectionnant les régions spectrales caractéristiques, on peut différencier deux alcools de nature chimique voisine. L'appareil garde en mémoire les fréquences caractéristiques des solides ou des liquides et grâce à des indications données par l'utilisateur il peut sélectionner les fréquences à utiliser et donner la probabilité de présence d'un corps, la probabilité augmente avec le temps (en consultant de plus en plus d'éléments spectraux) jusqu'à l'identification définitive et exacte.

## Revendications

1. Appareil de spectrométrie Raman comportant une source d'excitation (14), des moyens optiques d'excitation dirigeant un faisceau d'excitation (15) issu de cette source sur l'échantillon (17), des moyens de collecte (18) de l'énergie diffusée par l'échantillon (17) comportant une fente d'entrée (19) de diffusion, un système de dispersion spectrale (20), des moyens de sélection de l'énergie Raman (23), un détecteur (22), des moyens optiques de détection dirigeant l'énergie Raman collectée et sélectionnée vers le détecteur (22), les moyens optiques (16) d'excitation faisant disperser le faisceau d'excitation (15) par le système de dispersion (20), lesdits moyens optiques (16) d'excitation comportant une fente d'entrée (24) et une fente de sortie d'excitation constituée par la fente d'entrée (19) de diffusion et sélectionnant la longueur d'onde d'excitation, **caractérisé en ce que** ledit appareil de spectrométrie Raman comprend des moyens de prélèvement d'une partie du faisceau d'excitation, lesdits moyens de prélèvement étant placés entre la fente de sortie d'excitation et l'échantillon (17) et permettant de contrôler la longueur d'onde d'excitation à son maximum d'énergie par la microrotation du système de dispersion (20).

2. Appareil de spectrométrie Raman selon la revendication 1 dans lequel la fente d'entrée (19) d'excitation est dans le plan focal du système de dispersion (20).

3. Appareil de spectrométrie Raman selon les revendications 1 ou 2, **caractérisé en ce que** les moyens de sélection (23) de l'énergie Raman comportent un filtre holographique qui arrête la longueur d'onde d'excitation.

4. Appareil de spectrométrie Raman selon l'une quelconque des revendications 1 à 3, **caractérisé en ce que** les moyens de sélection (23) de l'énergie Raman comportent un système réflecteur à micromiroirs (27) commandables.

## Claims

1. A Raman spectrometry apparatus containing a source of excitation (14), optical means of excitation directing a beam of excitation (15) derived from that source on the sample (17), means (18) for collecting the energy diffused by the sample (17) containing an inlet diffusion slot (19), a spectral dispersion system (20), means for selecting the Raman energy (23), a detector (22), optical detection means directing the Raman energy thus collected and selected to the detector (22), the optical means (16) of excitation causing the beam of excitation (15) to be dispersed by the dispersion system (20), said optical means (16) of excitation containing an inlet slot (24) and an outlet slot of excitation constituted by the inlet diffusion slot (19) and selecting the wavelength of excitation, **characterised in that** it comprises means for sampling a portion of the beam of excitation, said means for sampling a portion of the beam of excitation being placed between an outlet slot of excitation and the sample (17) and enable to control the wavelength of excitation at its maximum of energy by microrotation of the dispersion system (20).

2. A Raman spectrometry apparatus according to claim 1 wherein the inlet slot (19) of excitation lies in the focal plane of the dispersion system (20).

3. A Raman spectrometry apparatus according to the claims 1 or 2, **characterised in that** the means of selection (23) of the Raman energy include a holographic filter which stops the wavelength of excitation.

4. A Raman spectrometry apparatus according to any of the claims 1 to 3, **characterised in that** the means of selection (23) of the Raman energy include an operatable micromirror reflective system (27).

## Patentansprüche

1. Raman-Spektrometrievorrichtung, die eine Erregungsquelle (14), optische Erregungsmittel, die einen Erregungsstrahl (15), der aus dieser Quelle stammt, auf die Probe (17) richtet, Mittel zum Sammeln (18) der von der Probe (17) gesendeten Energie, die einen Eingangsdiffusionsschlitz (19) aufweisen, ein Spektraldispersionssystem (20), Mittel zum Auswählen der Raman-Energie (23), einen Detektor (22), optische Erfassungsmittel, die die gesammelte und ausgewählte Raman-Energie zu dem Detektor (22) leiten, optische Erregungsmittel (16), die den Erregungsstrahl (15) durch das Streuungssystem (20) streuen lassen, aufweist, wobei die optischen Erregungsmittel (16) einen Erregungseingangsschlitz (24) und einen Erregungsausgangsschlitz aufweisen, der aus dem Diffusionseingangsschlitz (19) besteht und die Erregungswellenlänge auswählt, **dadurch gekennzeichnet, dass** die Raman-Spektrometrievorrichtung Mittel zum Entnehmen eines Teils des Erregungsstrahls aufweisen, wobei die Entnahmemittel zwischen dem Erregungsausgangsschlitz und der Probe (17) platziert sind und es erlauben, die Erregungswellenlänge auf ihr Energiemaximum durch die Mikrorotation des Streuungssystems (20) zu steuern.

2. Raman-Spektrometrievorrichtung nach Anspruch 1, bei der der Erregungseingangsschlitz (19) in der Brennebene des Streuungssystems (20) liegt.

3. Raman-Spektrometrievorrichtung nach Anspruch 1 oder 2, **dadurch gekennzeichnet, dass** die Mittel (23) zum Auswählen der Raman-Energie ein holografisches Filter aufweisen, das die Erregungswellenlänge filtert.

4. Raman-Spektrometrievorrichtung nach einem der Ansprüche 1 bis 3, **dadurch gekennzeichnet, dass** die Mittel (23) zum Auswählen der Raman-Energie ein Reflektorsystem mit steuerbaren Mikrospiegeln (27) aufweisen.
